Europäisches Patentamt

European Patent Office

Office européen des brevets

(19)

(11) Veröffentlichungsnummer: **0 023 886**
**A1**

(12) # EUROPÄISCHE PATENTANMELDUNG

(21) Anmeldenummer: **80810232.1**

(22) Anmeldetag: **24.07.80**

(51) Int. Cl.³: **C 09 B 67/20,** C 09 C 3/10,
C 08 J 3/22, C 08 L 29/08

(30) Priorität: **30.07.79 CH 7008/79**

(43) Veröffentlichungstag der Anmeldung: **11.02.81**
**Patentblatt 81/6**

(84) Benannte Vertragsstaaten: **CH DE FR GB IT LI NL SE**

(71) Anmelder: **CIBA-GEIGY AG, Patentabteilung Postfach,
CH-4002 Basel (CH)**

(72) Erfinder: **Zwahlen, Günther, Landskronstrasse 12,
CH-4143 Dornach (CH)**
Erfinder: **Ruf, Peter, Im Spiegelfeld 8,
CH-4102 Binningen (CH)**

(54) **Pigmentpräparate, Verfahren zu deren Herstellung und deren Verwendung.**

(57) Ein für die Pigmentierung von polymerem organischem Material, insbesondere von Duroplasten und Duromeren, geeignetes Pigmentpräparat ist aus einem Pigment und einem Styrol-Allylalkohol-Copolymerisat als Trägerharz zusammengesetzt. Es zeichnet sich durch gute Verträglichkeit mit dem zu pigmentierenden Material aus und neigt nicht zu Ausblühungen. Es wird durch Einarbeitung des Pigmentes in das Trägerharz durch Salz- oder Schmelzknetung oder durch Flushprozeß hergestellt.

EP 0 023 886 A1

Case 3-12455/+

## Pigmentpräparate, Verfahren zu deren Herstellung und deren Verwendung

Gegenstand der Erfindung ist ein Pigmentpräparat, welches als Trägerharz ein Styrol-Allylalkohol-Copolymerisat enthält.

Zur Färbung von polymerem organischem Material werden häufig nicht Pigmente, sondern Pigmentpräparate eingesetzt, worin das Pigment bereits in einer feinverteilten Form vorliegt. Solche Pigmentpräparate bestehen meist aus dem Pigment und einem Trägerharz, welches für die Applikation bestimmte Eigenschaften aufweisen muss. Dazu gehören die Viskosität seiner Schmelze, seine gute Verteilbarkeit im Substrat und insbesondere seine Verträglichkeit mit dem Substrat.

Es ist bereits eine grosse Anzahl von Trägerharzen bekannt, welche sich für die Herstellung und Anwendung von Pigmentpräparaten eignen, besonders zum Pigmentieren lösungsmittelhaltiger Systeme wie Anstrichfarben und Druckfarben, aber auch zum Pigmentieren von Kunststoffen. Während es gelungen ist, zum Pigmentieren thermoplastischer Kunststoffe recht gut geeignete Pigmentpräparate zu schaffen, ist das zum Pigmentieren von härtbaren Kunststoffen bisher nicht gelungen. Wohl sind zwar solche Präparate auf Basis verschiedener Trägerstoffe zum Pigmentieren thermohärtender Kunststoffe in der Patentliteratur beschrieben, so z.B. Präparate auf Basis von Ketonharzen, Kolophonium, Vinylalkylbenzol-Copolymerisat mit und ohne Alkylmethacrylat, Sulfonamidharz, Sucrose-Derivat oder Fettsäureamid. Alle diese Präparate weisen jedoch gravierende Nachteile auf, die ihren Einsatz praktisch verunmöglichen. Besonders nachteilig ist z.B. das starke Ausblühen der organischen Pigmente aus dem mit einem solchen Präparat pigmentierten Fertigartikel, oftmals schon beim Kaltlagern, wobei es sich gezeigt hat, dass das Nachhärten der pigmentierten Substrate keine Verbesserung bringt. Andere Nachteile der bisher beschriebenen Präparate sind z.B. im Falle von Ketonharzen,
dass sie bei thermischer Verarbeitung weiterkondensieren können und
dadurch unlöslich und      unschmelzbar werden, oder im Falle von
Sulfonamidharzen, dass sie thermisch unbeständig sind und schon bei
Temperaturen unter 100°C sich unter Abspaltung von Formaldehyd zersetzen. Die thermische Beständigkeit der Trägerstoffe und die gute
Ausblühbeständigkeit der mit entsprechenden Präparaten pigmentierten
Substrate ist aber eine absolute Notwendigkeit beim Pigmentieren von
Kunststoffen.

Demgegenüber hat sich nun herausgestellt, dass sich Pigmentpräparate,
die als Trägerharz ein Copolymer aus Styrol und Allylalkohol enthalten,
ausgezeichnet zum Pigmentieren von polymerem organischem Material und
insbesondere von härtbaren Kunstharzen eignen, wobei der Anteil an
Allylalkohol, bezogen auf das Copolymer, 25 bis 40 Gew.-% beträgt.

Gegenüber den Pigmentpräparaten mit den vorgenannten Trägerharzen haben die erfindungsgemässen Pigmentpräparate den Vorteil, dass
es nicht zu Ausblühungen des Pigments kommt. Ausserdem weist das
Trägerharz eine gute Thermostabilität auf.

Das erfindungsgemässe Pigmentpräparat kann dadurch hergestellt werden, dass man das Pigment in das Trägerharz durch Salz-
oder Schmelzknetung diskontinuierlich oder kontinuierlich, oder durch
Flushprozess einarbeitet. Bei dem letteren Verfahren wird - meist in
einem Kneter - eine wässrige Pigmentpaste mit dem wasserabstossenden Träger,
gegebenenfalls in Anwesenheit von mit Wasser nicht mischbaren organischen
Lösungsmitteln, vermischt, bis das Pigment von der wässrigen Phase in die
organische Phase des Trägers hinüberwechselt. Das pigmentfreie Wasser
wird dann abgeschieden und der pigmenthaltige Träger aufgearbeitet.
Eine andere Möglichkeit der Herstellung ist das Ausfällen des Trägerharzes aus einer Lösung in Gegenwart des Pigments.

Für die erfindungsgemässen Pigmentpräparate eignen sich
anorganische und insbesondere organische Pigmente als trockene
Pulver oder vorzugsweise als wässrige Filterkuchen, wie sie bei der Synthese und/oder nach einer Konditionierung oder Mahlung anfallen.

Als anorganische Pigmente kommen beispielsweise in Betracht:
Titandioxid, Eisenoxide, Chromoxid- und Chromatpigmente wie Chromoxidgrün und Bleichromatgelb und -rot, Molybdatorange, Cadmiumsulfide
und -sulfoselenide, oder Ultramarine. Als organische Pigmente können
Russe, Azo-, Methin-, Azomethin-, Phthalocyanin-, Nitro-, Anthra-
chinon-, Perinon-, Perylentetracarbonsäurederivat-, Dioxazin-, Thio-
indigo-, Iminoisoindolinon-, Chinophthalon-, Chinacridon- oder Metallkomplexpigmente, beispielsweise von Methin- oder Azomethinfarbstoffen, sowie Gemische verschiedener Pigmente verwendet werden.

Zusammen mit oder anstelle von Pigmenten können auch während
der Verarbeitung im einzufärbenden Substrat lösliche Farbkörper
verwendet werden.

Der Gesamt-pigmentgehalt der erfindungsgemässen Präparate kann
zwischen 20 und 80 Gew.-% betragen und liegt vorzugsweise zwischen
40 und 60 Gew.-%. Gegebenenfalls sind auch Pigmentgehalte von<20% von
Interesse.

Ausser dem Farbkörper können die erfindungsgemässen Präparate
gegebenenfalls noch andere Stoffe enthalten, z.B. Hilfstoffe, Stabilisatoren, Lichtschutzmittel, Antioxydantien oder Füllstoffe.

Das erhaltene Pigmentpräparat eignet sich hervorragend zum
Pigmentieren von polymerem organischem Material, insbesondere von
härtbaren Kunststoffen. Der besondere Vorteil bei der Verwendung des
erfindungsgemässen Pigmentpräparats, worin das Pigment in feinverteilter Form im Styrol-Allylalkohol-Copolymerisat vorliegt, liegt
darin, dass der Verarbeiter des polymeren organischen Materials dieses
nicht mehr getönt kaufen und in vielen Varianten vorrätig halten muss,
sondern dass er sich nur noch farbloses Kunststoffgranulat beschafft,
welches bereits mit allen erforderlichen Zuschlägen versehen sein kann,
und dieses dann selbst mit dem erfindungsgemässen Pigmentpräparat ein-

- 4 -                                           0023886

färbt. Das geschieht gewöhnlich durch Mischen von Harzgranulaten
und Pigmentpräparaten und der Weiterbehandlung der Gemische in den
verschiedenen Verarbeitungsmaschinen.

Insbesondere werden die erfindungsgemässen Pigmentpräparate
zum Pigmentieren von härtbaren Kunststoffen, den sogenannten Duroplasten  oder Duromeren verwendet. Dazu gehören vor allem die als
Aminoplaste definierten härtbaren Formaldehyd-Kondensationsprodukte
auf der Basis von Harnstoff, Dicyandiamid, Melamin oder/und ihren
Derivaten, sowie von Anilinen, Urethanen und Thioharnstoff, mit oder
ohne Phenol. Solche Duroplaste aus vorzugsweise 1 Mol Melamin und
1,6 bis 2,2 Mol Formaldehyd enthalten zweckmässigerweise Zusatzstoffe,
wie beispielsweise Cellulosepulver, Carnaubawachs, Bolus alba und
Phthalsäureanhydrid. Die erhaltene Mischung kann dann in einem Cokneter
plastifiziert und geknetet werden, woraufhin das Material zerkleinert,
gemahlen und tablettiert bzw. granuliert werden kann. Die Granulate
aus pigmentiertem Harz können dann plastifiziert und im Kompressionsverfahren zu Pressteilen verarbeitet werden. Diese zeichnen sich durch
einen guten Aspekt, eine homogene Farbverteilung und gute Ausblühbeständigkeit aus.

In den nachfolgenden Beispielen bedeuten die Teile, sofern nichts
anderes angegeben, Gewichtsteile und die Prozente Gewichtsprozente.

Beispiel 1: In einem Laborkneter werden 40 Teile rohes β-Cu-Phthalocyanin, 60 Teile eines Styrol-Allylalkohol-Copolymerisats (mittleres Molekulargewicht $M_w$=1700, Hydroxylzahl 7,7 Gew.-%, Allylalkoholgehalt ca. 33 Gew.-%),160 Teile fein gemahlenes Natriumchlorid und 12 Teile Diacetonalkohol während 4 Std. bei 70°C geknetet. Durch Zugabe von 100 Teilen Wasser wird die Knetmasse im Kneter unter Kühlung in ein feuchtes Granulat übergeführt. Dieses wird ausgeladen und mit 3000 Teilen Wasser zur Feinstgranulierung auf einer Zahnkolloidmühle gemahlen. Die erhaltene Suspension wird filtriert, der Filterkuchen mit beliebig viel Wasser salz- und lösungsmittelfrei gewaschen und dann im Vakuumschrank bei 50°C getrocknet. Man erhält ein weiches blaues Pulver, enthaltend 40% Pigment und 60% Trägerharz.

Dieses Präparat eignet sich z.B. hervorragend zum Pigmentieren von Aminoplastmassen, z.B. auf einer Schneckenspritzgussmaschine.

Nimmt man anstelle des rohen β-CuPc-Pigmentes z.B. C.I. Pigment Rot 144 oder C.I. Pigment Rot 220, so erhält man ebenfalls gute Präparate.

Beispiel 2: In einem Laborkneter werden 15 Teile fein gemahlenes β-Cu-Phthalocyaninblau, 135 Teile $TiO_2$ (Kronos RN 56), 150 Teile des in Beispiel 1 beschriebenen Styrol-Allylalkoholpolymerisats und 15 Teile Diacetonalkohol während 1 Std. bei 60°C geknetet. Durch Zugabe von Eis wird die Knetmasse im Kneter unter Kühlung granuliert. Das Granulat wird ausgeladen und mit 3000 Teilen Wasser zur Feinstgranulierung auf einer Zahnkolloidmühle gemahlen. Die erhaltene Suspension wird filtriert, der Filterkuchen mit beliebig viel Wasser lösungsmittelfrei gewaschen und dann im Vakuumschrank bei 50°C getrocknet. Das weiche Trockengut kann leicht zu einem feinen Pulver zerdrückt werden. Es stellt ein Präparat dar, enthaltend 5 % Cu-Phthalocyaninblau, 45 % $TiO_2$ und 50 % Trägerharz.

Dieses Präparat eignet sich z.B. hervorragend zum Pigmentieren von Aminoplastmassen.

Beispiel 3: Nimmt man anstelle des blauen Pigments von Beispiel 1 40 Teile des gelben Disazopigments C.I. Pigment Gelb 93 und verfährt damit wie in Beispiel 1 beschrieben, so erhält man ein entsprechendes Gelbpräparat.

Beispiel 4: 37,5 Teile des gemäss Beispiel 3 erhaltenen Präparats, 135 Teile $TiO_2$ (Kronos CL 220), 127,5 Teile des oben beschriebenen Styrol-Allylalkohol-Copolymerisats und 15 Teile Diacetonalkohol werden während 1 Std. in einem Labor-Kneter bei 60° geknetet. Die Knetmasse wird wie in Beispiel 2 beschrieben zerlegt und aufgearbeitet. Man erhält ein gelbes Pigmentpräparat, bestehend aus 5 % Gelbpigment, 45 % $TiO_2$ und 50 % Trägerharz.

Beispiel 5: In einem Kneter werden

| 100 | Teile $TiO_2$ (Kronos CL 220) |
| 6 | Teile Eisenoxydrot (Bayferrox 180, BAYER) |
| 0,2 | Teile C.I. Pigment Gelb 110 |
| 0,002 | Teile Russ (Farbruss FW1, DEGUSSA) |
| 294 | Teile Styrol-Allylalkoholcopolymerisat (wie in Beispiel 1) und |
| 35 | Teile Diacetonalkohol |

während 1 Std. bei 60°C geknetet. Die Aufarbeitung erfolgt wie in Beispiel 2 beschrieben.

Man erhält ein Pigmentpräparat mit ausgezeichneten applikatorischen Eigenschaften.. Eine Gefahr der Entmischung der einzelnen Komponenten besteht nicht, da die einzelnen Pigmente gleichmässig verteilt in dem Trägerharz vordispergiert und eingebettet sind.

Beispiel 6: In einem Kneter, dessen Mantelheizung auf 120°C geheizt wird, werden 78 Teilen des schon erwähnten Styrol-Allylalkohol-Copolymerisats gegeben und geschmolzen. In die Schmelze werden 52 Teile C.I. Pigmentrot 144 in Form eines 24% Pigment enthaltenden wässerigen Filterkuchens in mehreren Portionen eingetragen. Man knetet so lange,
bis das Pigment vollständig von der Trägerschmelze aufgenommen und das
Wasser praktisch farblos abgeschieden ist (im Laborkneter 15-30 Min.).
Nun wird in Gegenwart des Wassers der laufende Kneter gekühlt, wobei
nach kurzer Zeit ein feuchtes Granulat entsteht, das ausgeladen und
getrocknet wird. Das erhaltenen Präparat hat einen Pigmentgehalt von
40% und weist eine ebenso gute Qualität auf wie z.B. das Präparat
erhalten gemäss Beispiel 2.

Beispiel 7:  Man verfährt wie in Beispiel 6 beschrieben, verwendet
jedoch anstelle eines offenen Kneters einen mit Stempel ausgerüsteten
Kneter. Nachdem das Pigment von der Trägerharzschmelze aufgenommen ist,
wird das ausgeschiedene Wasser abgegossen und die Schmelze im Kneter
getrocknet. Die trockene Schmelze lässt man in der abgestellten
Maschine  unter intensiver Kühlung erstarren und überführt die erstarrte kalte Präparatmasse durch Einschalten der Maschine in ein Bruchgranulat.

Beispiel 8:  50 Teile C.I. Pigmentrot 144 und 50 Teile des schon erwähnten Styrol-Allylalkohol-Copolymerisats in Pulverform werden homogen
vermischt und die Mischung auf einem 2-Wellenextruder (Leistritz LSM
30/34) zu einem Draht extrudiert, der auf einer Schneidemaschine zu
zylindrischen Granulaten geschnitten wird. Man erhält so ein Präparat
von sehr guter Qualität.

Beispiel 9:  Zu 550 Teilen Harz aus 1 Mol Melamin und 1.6-2.2 Mol
Formaldehyd, welches eine Wasserverträglichkeit (Trübungspunkt) von
1 Teil Harz auf 2-3 Teile Wasser bei 20°C aufweist und auf <2% Feuchtigkeit getrocknet wurde, werden 340 Teile Cellulosepulver, 5 Teile
Carnaubawachs, 2 Teile Zinkstearat, 93 Teile Bolus alba (China Clay)
und 1 Teil Bolus alba, enthaltend 10% Phthalsäureanhydrid fein vermahlen,
und 15 Teile eines Pigmentpräparats, erhalten gemäss Beispiel 1, gegeben
und in einem wassergekühlten Henschel-Schnellmischer bei 1200 Umdrehungen pro Minute während 2 Minuten vorgemischt. Mit der Menge des einge-

0023886

setzten Phthalsäureanhydrids kann die Härtungsgeschwindigkeit variiert werden. Diese Vormischung wird anschliessend in einem Kokneter PR-46 der Fa. Buss AG in Pratteln (Schweiz) bei 100-110°C plastifiziert und geknetet. Die anfallenden Schollen werden in einer Hammermühle mit Siebeinsatz (Lochdurchmesser 3 mm) zerschlagen, das so erhaltene Produkt in einer Kugelmühle von 5 Liter Inhalt mit 3 kg Porzellankugeln in 12 Stunden zu feinem Pulver vermahlen, auf einer Presse tablettiert und zu einem Granulat von 0,25-2 mm Korngrösse gebrochen.

Das so erhaltene Granulat wird wieder wie oben beschrieben tablettiert, in einem Hochfrequenzofen auf 80-92°C erwärmt und anschliessend 3 Minuten in einem 150-160°C heissen Presswerkzeug im Kompressionsverfahren zu Pressteilen verarbeitet.

Die so gewonnenen Pressteile zeichnen sich durch einen guten Aspekt sowie eine sehr homogene Farbverteilung und gute Ausblühbeständigkeit aus.

Beispiel 10: Man stellt eine Pressmasse gemäss Beispiel 9 her. Das Pigmentpräparat wird jedoch erst bei der Feinmahlung in der Kugelmühle zugesetzt.

Das so erhaltene feine Pulver wird wie im Beispiel 9 tablettiert und granuliert. Das Granulat wird zu Tabletten gepresst, in einem Hochfrequenzofen auf 80-90°C erwärmt, auf einer Transferpresse mittels Spritzkolben in ein 150-160°C heisses Werkzeug transferiert und 3 Min. ausgehärtet. Das so erhaltene Pressteil zeichnet sich durch eine sehr homogene Farbverteilung und gute Ausblühbeständigkeit aus.

Beispiel 11: Zu 1300 Vol.-Teilen Harnstoffsirup, hergestellt aus 1 Mol Harnstoff und 1,5-1,8 Mol Formaldehyd, werden 335 Teile Celluloseschnitzel und 0,45 Teile Zinkstearat gegeben. Die Pressmasse wird in der üblichen Art stabilisiert und beschleunigt und in einem Doppelmuldenkneter bei 60°C so lange geknetet, bis die Feuchtigkeit (4 Std. bei 105°C gemessen) noch ca. 5% beträgt.

Die so erhaltene Pressmasse wird zusammen mit 10 Teilen Pigmentpräparat, erhalten gemäss Beispiel 3, in einer Kugelmühle fein vermahlen, und es wird daraus ein Granulat hergestellt.

Verarbeitet man dieses Granulat wie im Beispiel 9 beschrieben, so erhält man im Farbton homogene und ausblühbeständige Pressteile.

Beispiel 12: Zu 510 Teilen Harz, hergestellt aus 1 Mol Melamin, 0,1-0,3 Mol Phenol und 2,2-2,7 Mol Formaldehyd, werden 250 Teile Holzmehl, 50 Teile Cellulosepulver, 175 Teile eines Gemisches aus Bariumsulfat und Zinksulfid, 15 Teile Zinkstearat und 10 Teile Pigmentpräparat, erhalten gemäss Beispiel 5, gegeben und in einem Schnellmischer vorgemischt.

Das so erhaltene Vorgemisch wird auf einem Walzenstuhl bei 110-130°C geknetet und als Fell vom Walzenstuhl abgezogen. Anschliessend wird das Fell zu einem staubarmen Granulat gebrochen und in einer Spritzgussmaschine auf bekannte Art und Weise zu Pressteilen verarbeitet.

Man erhält Pressteile mit guter Farbverteilung und hoher Ausblühbeständigkeit.

Beispiel 13: 1000 Teile modifizierte Polyester-Formmasse (Sorte 3630 styrolfrei der Fa. Bakelite), die in einer Hammermühle wie in Beispiel 6 aber mit einem Siebeinsatz (Lochdurchmesser 2 mm) gemahlen wurde, werden zusammen mit 10 Teilen Pigmentpräparat, erhalten gemäss Beispiel 1, in einer Kugelmühle während 12 Stunden zu feinem Pulver vermahlen. Das Pulver wird wie in Beispiel 9 tablettiert und granuliert.

Das so erhaltene Granulat wird wie im Beispiel 10 verarbeitet, wobei jedoch das Werkzeug anstatt auf 150-160°C auf 170-175°C aufgeheizt wird.

Die auf diese Art pigmentierte Formmasse zeichnet sich durch eine homogene Farbverteilung und sehr gute Ausblühbeständigkeit aus.

Beispiel 14: Es wird eine Formmasse analog Beispiel 13, aber mit Polyester-Formmasse Typ 802 (Fa. Bakelite) hergestellt. Für die Pigmentierung werden 15 Teile Pigmentpräparat, erhalten gemäss Beispiel 4, eingesetzt. Das pigmentierte Pulver wird auf die gleiche Art wie im Beispiel 10 beschrieben granuliert und verarbeitet.

Auch diese Pressmasse ergibt Pressteile mit guter Farbverteilung und guter Ausblühbeständigkeit.

Beispiel 15: Zu 650 Teilen eines Harzes gemäss Beispiel 9 werden 250 Teile Cellulosepulver, 5 Teile Carnaubawachs, 4 Teile Zinkstearat, 100 Teile Bolus alba und 1 Teil Bolus alba, enthaltend 10% Phthalsäureanhydrid, fein vermahlen, im Schnellmischer vermischt und im Cokneter PR-46 (Fa. Buss AG, Pratteln) bei 100-110°C plastifiziert und geknetet. Die anfallenden Schollen werden in einer Mühle auf eine Korngrösse zwischen 0,25 und 3,0 mm gemahlen. Gröberes sowie feineres Korn (Staub) werden ausgesiebt.

Auf 1000 Teile eines so erhaltenen Granulats werden in einem Henschel-Schnellmischer ohne Kühlung 25 Teile eines Pigmentpräparats, erhalten gemäss Beispiel 3, bei 1200 Umdrehungen pro Minute so lange aufgemischt, bis die Temperatur der Masse 40-50°C beträgt. Die so eingefärbte Pressmasse wird in einer Schneckenspritzgussmaschine auf bekannte Art und Weise zu Pressteilen verarbeitet.

Man erhält auf solche Weise Pressteile mit gute Farbverteilung und hoher Ausblühbeständigkeit.

Beispiel 16: 65 Teile stabilisiertes Polyvinylchlorid, 35 Teile Dioctylphthalat und 0,5 Teile Pigmentpräparat, erhalten gemäss Beispiel 1, werden untereinander verrührt und dann auf einem Zweiwalzenkalander während 7 Min. bei 140°C hin und her gewalzt. Man erhält sehr stark und homogen gefärbte Folien mit ausgezeichneten Echtheiten.

Beispiel 17: Eine Mischung von 1 Teil des nach Beispiel 1 erhaltenen 40 %igen Pigmentpräparats und 200 Teilen Polyäthylen-HD Granulat VESTOLEN A-60-16 (Handelsname der Firma Hüls) wird während einiger Minuten in einer 500 ml Glasflasche auf einer Rollbank gemischt. Danach wird die Mischung auf einem Einwellenextruder bei einer Temperatur von ca. 170°C zu einem Band extrudiert. Man erhält ein stark gefärbtes Band, in dem das Pigment in ausgezeichneter Verteilung vorliegt.

Patentansprüche

1.    Pigmentpräparat, dadurch gekennzeichnet, dass es als Trägerharz ein Styrol-Allylalkohol-Copolymerisat enthält.

2.    Pigmentpräparat gemäss Anspruch 1, dadurch gekennzeichnet, dass es als Trägerharz ein Copolymerisat mit 25-40 Gew.-%, bezogen auf das Copolymerisat, Allylalkoholanteil enthält.

3..    Pigmentpräparat gemäss Anspruch 1, dadurch gekennzeichnet, dass der Pigmentanteil bezogen auf das Gesamtpräparat,20-80 Gew.-% beträgt.

4.    Verfahren zur Herstellung des Pigmentpräparats gemäss Anspruch 1, dadurch gekennzeichnet, dass man das Pigment in das Trägerharz durch Salz- oder Schmelzknetung oder durch Flushprozess einarbeitet.

5.    Verwendung des Pigmentpräparats gemäss Anspruch 1 zum Pigmentieren von polymerem organischem Material.

6.    Verwendung gemäss Anspruch 3 zum Pigmentieren von härtbaren Kunststoffen.

7.    Verwendung gemäss Anspruch 4 zum Pigmentieren von Aminoplasten.

8.    Verwendung gemäss Anspruch 5 zum Pigmentieren von Melamin-Formaldehyd-Harzen.

9.    Polymeres organisches Material, welches mit dem Pigmentpräparat gemäss Anspruch 1 pigmentiert ist.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 359 441 (AGFA-GEVAERT) (17-02-1978)<br><br>* Anspruch 1; Seite 7, Zeile 17 - Seite 8, Zeile 14; Seite 13, Zeile 28 - Seite 14, Zeile 3 *<br><br>& DE - A - 2 730 512<br><br>-- | 1-5,9 |
| | FR - A - 1 516 797 (AMERICAN CYANA-MID)<br><br>* Zusammenfassung; Beispiel 1 *<br><br>-- | 6-8 |
| A | US - A - 3 969 569 (J.A. VASTA)<br><br>* Anspruch 1; Spalte 5, Zeilen 38-57 *<br><br>-- | 1 |
| | DE - A - 2 312 153 (CIBA-GEIGY)<br><br>* Seite 3, Zeilen 3-9; Seiten 7,8 *<br><br>---- | 4 |

### KLASSIFIKATION DER ANMELDUNG (Int. Cl.³)

C 09 B 67/20
C 09 C 3/10
C 08 J 3/22
C 08 L 29/08

### RECHERCHIERTE SACHGEBIETE (Int. Cl.³)

C 08 J 3/22
C 08 L 25/06
29/08
C 09 B 67/20
C 09 C 3/10

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-11-1980 | HALLEMEESCH |

EPA form 1503.1 06.78